Europäisches Patentamt

European Patent Office

Office européen des brevets

(11) Veröffentlichungsnummer : **0 068 349**
**B1**

(12) **EUROPÄISCHE PATENTSCHRIFT**

(45) Veröffentlichungstag der Patentschrift :
30.01.85

(51) Int. Cl.⁴ : **A 22 C 13/00**

(21) Anmeldenummer : 82105345.1

(22) Anmeldetag : 18.06.82

(54) **Zweischichtige Wursthülle aus einem äusseren Textilgewebe und einer innenliegenden Kollagenbeschichtung und Verfahren zu ihrer Herstellung sowie unter Verwendung dieser Wursthülle hergestellte Roh- und Brühwurst.**

(30) Priorität : 19.06.81 DE 3124028

(43) Veröffentlichungstag der Anmeldung :
05.01.83 Patentblatt 83/01

(45) Bekanntmachung des Hinweises auf die Patenterteilung : 30.01.85 Patentblatt 85/05

(84) Benannte Vertragsstaaten :
AT BE CH DE FR IT LI LU NL SE

(56) Entgegenhaltungen :
BE-A- 708 573
CH-A- 372 909
FR-A- 460 154
GB-A- 1 333 602

(73) Patentinhaber : NATURIN-WERK Becker & Co.
Postfach 1540
D-6940 Weinheim/Bergstrasse (DE)

TEXDA GmbH, Inhaber P. Wolf
Holtstrasse 57
D-4500 Osnabrück 12 (DE)

(72) Erfinder : Wolf, Hand Peter
Nordstrasse 14
D-4514 Ostercappeln (DE)
Erfinder : Nümann, Alexander
Im Walde 3
D-4500 Osnabrück (DE)
Erfinder : Bräumer, Klaus, Dr.rer.nat. Dipl.-Chem
Bonhoeffer Strasse 11
D-6940 Weinheim (DE)

(74) Vertreter : Klöpsch, Gerald, Dr.-Ing.
An Gross St. Martin 6
D-5000 Köln 1 (DE)

## Beschreibung

Die Erfindung betrifft eine zweischichtige Wursthülle aus einem äußeren Textilgewebe und einer innenliegenden Kollagenbeschichtung, ein Verfahren zu ihrer Herstellung sowie unter Verwendung dieser Wursthülle hergestellte Roh- und Brühwurst.

Für tierischen Darm als Wursthülle wurden schon viele Substitutionsprodukte geschaffen. Bekannt sind künstlich hergestellte Wursthüllen aus rekonstituiertem Kollagen aus Rinderspalthäuten, die ähnliche Eigenschaften besitzen wie der tierische Darm, da sie aus dem gleichen Grundstoff Kollagen bestehen, d. h. sie sind wasserdampf- und gasdurchlässig. Würste in Kollagenwursthüllen können wie solche in natürlichem Darm geräuchert werden, und beim Trocknen während des Reifeprozesses schrumpfen beide mit dem Wurstbrät mit und bilden eine eng anliegende Hülle wie eine Haut.

Wursthüllen aus regenerierter Zellulose sind zwar ebenfalls wasserdampf- und gasdurchlässig, sie machen aber den Schrumpfungsprozess nur in geringem Maße mit, so daß die fertige Wurst von einem faltigen Darm umgeben ist. Daraus schließt dann der Endverbraucher, dass es sich nicht um frische Wurst handelt. Weiterhin finden sich auf dem Markt Zellulosedärme mit wasserdampf- und gasundurchlässigen Kunststoffbeschichtungen und Wursthüllen aus thermoplastischen Kunststoffen für Brühwürste, die unabhängig vom äußeren Ansehen gewichthaltend sind, d. h. auch nach einer Lagerzeit von mehreren Tagen hat die Wurst noch das gleiche Gewicht wie beim Füllen. Daher erleidet der Hersteller bzw. der Verkäufer keine Erlöseinbuße durch Gewichtsverluste.

Auch Wursthüllen aus Kollagen wurden schon mit einer zweiten thermoplastischen Kunststoffhülle umgeben, um die Gewichtsverluste einzuschränken. Für die Herstellung von Rohwurst eignen sich aber nur wasserdampf- und gasdurchlässige Wursthüllen, da zur Reifung die Möglichkeit zum Gasaustausch und ein gewisses Austrocknen erforderlich sind. Für diesen Zweck werden u. a. auch Wursthüllen aus Nessel und ähnlichen Textil-Geweben in beachtlichen Stückzahlen hergestellt. Dabei besteht der Wunsch, eine Wurst von guter Qualität auch in einer besonders in Auge fallenden Form der Wursthülle anzubieten, um sie von der billigeren Massenware optisch abzuheben. Dazu eignen sich als Basismaterial besonders Textil-Gewebe, da man durch Zuschneiden und Zusammennähen fast jede beliebige Gestalt herstellen kann, z. B. in Anlehnung an Naturdarm : Butte, Hammelkappe, Blase, und Phantasieformen, z. B. Tropfen-, Flaschen-, Boxbeutel-, Schweinchen-, Osterhasen und Talerform.

Solche aus Geweben zusammengenähte Wursthüllen eignen sich jedoch nur für die Herstellung von Rohwurst, denn Rohwurstbrät ist verhältnismäßig grob und sehr trocken, weil keinerlei Schüttung (Wasser, Eis) zugesetzt wird.

Beim Versuch, sie für Brühwurst zu verwenden, treten schon beim Füllen mit Brät Flüssigkeit und lösliche Anteile davon durch die Poren des Gewebes nach aussen auf die Oberfläche der Wurst. Dies noch verstärkt während des Brühprozesses, bei dem die ausgetretene Masse gleichzeitig koaguliert. Dadurch wird die Wurstoberfläche ungleichmäßig mit einem im wesentlichen aus Eiweiß bestehenden Belag versehen, der nicht nur der Wurst ein unschönes Aussehen verleiht, sondern auch einen hervorragenden Nährboden für Bakterien und Schimmelpilze darstellt, wodurch die Haltbarkeit der Wurst stark eingeschränkt wird. Ausserdem wird durch das Austreten von Wurstmasse die Prallheit der Wurst vermindert, und man erhält eine von vornherein faltige Wurst.

Eine Kunststoffbeschichtung scheidet wegen zu geringer Wasserdampf- und Gasdurchlässigkeit aus. Es bestehen auch gewissen Probleme beim Abpellen : Wenn die Beschichtung von außen aufgetragen wird, so entsteht eine innige Verbindung zwischen dem Gewebe und dem Wurstbrät und ein sauberes Abpellen, ohne dass Fleischteilchen aus dem Wurstkörper mitgerissen werden, ist fast unmöglich. Wird die Kunststoffbeschichtung von innen aufgetragen, so ist zu befürchten, daß Splitter oder kleine Teile davon auf der Wurst zurückbleiben, denn beim Brühprozess versprödet die Beschichtung deshalb, weil z. B. Weichmacher ausgelaugt wird. Darüber hinaus bestehen auch Probleme hinsichtlich der Lebensmitteltauglichkeit der technisch geeigneten Kunststoffe und der Zusatzstoffe, mit denen die erwünschten Eigenschaften solcher Beschichtungen zu verbessern wären.

Es sind auch bereits verschiedene Kombinationen von Textil-Geweben mit Kollagen bekannt. So werden nach der DE-A-16 32 103 rund-gewebte (Textil)-Schläuche durch eine Ringdüse geführt und dabei ein- oder beidseitig mit einer Kollagenmasse überzogen bzw. imprägniert. Bei diesem Verfahren werden lockere, weitmaschige Gewebe verwendet, wobei eine innige Verbindung der Kollagenimprägnierung, die sowohl bei der Herstellung der Wurst wie beim Abpellen unlösbar ist, mit dem Textilgewebe angestrebt wird. Beim Abziehen der Wursthülle haftet also die Kollagenbeschichtung fest am Textilgewebe und lässt somit die Oberfläche des Wurstguts frei und ungeschützt.

Das gleiche Ziel verfolgen auch die DE-C-232 022 und DE-C-283 044, bei denen Gewebe mit einer Leimabkochung bzw. mit einem mit Blutplasma verdünntem Fleischbrei bestrichen oder imprägniert werden.

Eine weitere Schwierigkeit bei der Beschichtung von Textilgewebe mit Kollagen besteht darin, dass das aufgebrachte Kollagen während des Trocknens schrumpft. Dadurch wird das Gewebe zusammengezogen und wird faltig. Versucht man nachträglich das mit dem Kollagenfilm beschichtete Gewebe wieder in seine ursprüngliche Form und Grösse zu bringen, so erhält der Kollagenfilm eine Vielzahl von Rissen und ist nicht mehr intakt.

Aufgabe der Erfindung ist daher die Schaffung einer textilen Wursthülle, die zwar wasserdampf- und gasdurchlässig, jedoch flüssigkeits- und fettdicht ist, gleichermassen für Roh- und Brühwurst geeignet ist und deren Kollagenbeschichtung sich beim Abziehen der Wursthülle vom Textilgewebe löst und eine auf der Wurstoberfläche fest haftende, nicht abpellbare, aber essbare dünne Haut ergibt.

Diese Aufgabe wird erfindungsgemäß durch eine textile Wursthülle mit Kollagenbeschichtung gelöst, die eine geringe Menge, vorzugsweise 0,5 bis 4, insbesondere 0,75-2 Teile eines Haftvermittlers und 30-300, bevorzugt 50-150 Teile eines Weichmachers je 1 000 Teile Kollagen enthält.

Die Kollagenbeschichtung wird dabei auf der dem Wurstgut zugewandten Innenseite des Textilgewebes aufgebracht.

Als Haftvermittler, die die Haftung des Kollagens am Gewebe verbessern, sind Substanzen geeignet, die allgemein zum Wasserfestmachen von Kollagen dienen, wobei natürlich Substanzen bevorzugt sind, die lebensmitteltauglich sind. Geeignet sind zum Beispiel Holzrauchpräparate, Aldehyde, zum Beispiel Formaldehyd oder Glyoxal oder Metallsalze, wie Aluminiumsalze oder Eisensalze. Die Menge des Haftvermittlers hängt von seiner Wirksamkeit ab. So sind Aldehyde im allgemeinen in kleineren Mengen wirksam als zum Beispiel Aluminiumsalze.

Der Haftvermittler kann entweder in der Kollagenbeschichtung enthalten sein, oder aber bei der Verwendung von Metallsalzen, zum Beispiel Aluminiumsulfat, auf der Oberfläche des Textilgewebes angeordnet sein.

Die als Haftvermittler verwendeten Substanzen bewirken zugleich eine Verfestigung des aufgebrachten Kollagenfilms durch Quervernetzung der Kollagenfasern, was den Kollagenfilm stabiler gegen Wasser macht, so dass er sich beim Füllvorgang mit dem feuchten Wurstbrät nicht auflöst.

Für die Zwecke der Erfindung sollte das Beschichtungsgewicht 2 bis 20, vorzugsweise 5 bis 15 g Kollagen/m², gewogen nach 24 stündiger Klimatisierung in Normklima betragen.

Um die Geschmeidigkeit des Kollagenfilms zu verbessern enthält die Kollagenbeschichtung Weichmacher, die bevorzugt lebensmitteltauglich sind, wie zum Beispiel Glyzerin, Propylenglykol oder Sorbit. Die Weichmachermenge beträgt zweckmäßig 3 bis 30, vorzugsweise 5 bis 15 Gew.-% bezogen auf Kollagen-Trockenstoff-Gehalt.

Der erfindungsgemäß erzielte Effekt der Ablösbarkeit des Kollagenfilms vom Textilgewebe ist überraschend. Es hat sich gezeigt, dass dieser Effekt vom Verhältnis Weichmacher zu Haftvermittler abhängt. Dieser überraschende Effekt ist am stärksten ausgeprägt bei einem Verhältnis von Haftvermittler : Weichmacher : Kollagen von 0,8-1,25 Teilen : 75-125 Teilen : 1 000 Teilen.

Als Textilgewebe werden für die erfindungsgemäße Wursthülle Gewebe mit Leinenbindung mittlerer Dichte bevorzugt. Das Flächengewicht geeigneter Textilgewebe liegt zwischen 20 und 35 Fäden je cm in der Kette und zwischen 10 und 35 Fäden je cm im Schuß auf bei Garnstärken zwischen 40 und 70 Denier. Als Materialien kommen Gewebe auf der Basis von Baumvolle, Reyon oder Zellwoll/Polyester-Mischgarn ebenso in Frage wie Leinen, Halbleinen oder Nylon-Gewebe.

Gegenstand der Erfindung ist neben der Wursthülle auch das Verfahren zu ihrer Herstellung, das dadurch gekennzeichnet ist, dass ein Textilgewebe mit einer sehr verdünnten wässrigen Kollagendispersion eines Feststoffgehalts von nicht mehr als 5 Gew.-% Feststoff in Gegenwart eines Haftvermittlers in einer Menge von 0,5-4, vorzugsweise 0,75-2 Gewichtsteilen und eines Weichmachers in einer Menge von 30-300, vorzugsweise 50-150, Gewichtsteilen bezogen auf 1 000 Gewichtsteile Kollagen beschichtet und anschließend im gespannten Zustand getrocknet wird.

Es hat sich gezeigt, dass die Haftung zwischen Kollagen und Gewebe umso besser wird, je mehr Wasser die Kollagendispersion enthält, das heißt also je verdünnter sie ist. Die besten Haftwerte erhält man aus sehr verdünnten Dispersionen, wobei sich als zweckmäßig Kollagenaufbereitungen mit 0,1 bis 4 %, vorzugsweise 0,8 bis 2 % Feststoffgehalt erwiesen haben. In der Praxis wird mit etwa 1%igen Kollagendispersionen gearbeitet.

Die Haftung des Kollagens am Gewebe ist aber zu schwach und muß daher erfindungsgemäß durch die Verwendung von Haftvermittlern verbessert werden. Als Haftvermittler sind alle Substanzen geeignet, die allgemein zum Wasserfestmachen von Kollagen dienen, wobei naturgemäß Substanzen bevorzugt werden, die auch lebensmitteltauglich sind, zum Beispiel Holzrauchpräparate, Formaldehyd, Glyoxal oder Aluminiumoder Eisensalze.

Der Haftvermittler oder ein Gemisch verschiedener Haftvermittler werden bevorzugt der Kollagendispersion vor dem Beschichten zugemischt. Im Einzelfall, zum Beispiel bei der Verwendung von Aluminiumsalzen als Haftvermittler ist es jedoch zweckmäßiger, den Haftvermittler vor dem Beschichten mit Kollagen auf das Gewebe aufzusprühen und einzutrocknen. So wird beispielsweise bei der Verwendung von Aluminiumsulfat verfahren, wobei eine 1%ige $Al_2(SO_4)_3 \times 18 H_2O$-Lösung vor der Kollagenbeschichtung auf das Gewebe aufgesprüht und eingetrocknet wird.

Um das Schrumpfen des Kollagens beim Trocknen zu verhindern wird das mit der Kollagendispersion beschichtete Textilgewebe im straffgespannten Zustand getrocknet. Es wird deshalb durch einen Spannrahmentrockner geführt, nachdem es vor dem Einlauf in den Trockner mittels einer geeigneten Düse mit der Kollagendispersion beschichtet worden ist.

Das so erhaltene kollagenbeschichtete Textilgewebe kann nun durch entsprechenden Zuschnitt und Zusammennähen in jede gewünschte Wursthüllenform gebracht werden, wobei sich der Kollagenfilm an der Innenseite der Wursthülle befindet.

Gegenstand der Erfindung ist ferner eine unter Verwendung der erfindungsgemäßen Wursthülle hergestellte Roh- und Brühwurst.

Die erfindungsgemäße Wursthülle weist die folgenden Vorteile auf :

1. Beim Abziehen bildet sich eine auf der Wurstoberfläche fest haftende, nicht abpellbare aber essbare dünne Haut aus dem vorher am Textilgewebe haftenden Kollagenfilm. Dieser schließt die Oberfläche der Wurst mit einer glatten Schicht ab und gibt ihr durch die Farbe, die das Kollagen während des Räucherns angenommen hat, ein ansprechendes Aussehen. Außerdem lässt sich die Gewebehülle problemlos von der Wurst abpellen, ohne dass durch an der Pelle anhaftendes Wurstgut die Oberfläche der Wurst verletzt wird.

2. Da der auf das Wurstgut übergegangene Kollagenfilm auch vollkommen fettdicht ist, bleibt die textile Hülle fettfrei und sauber. Nach dem Entfernen dieser Hülle hat die Wurst deshalb einen angenehmen trockenen Griff.

3. Die erfindungsgemäße Wursthülle kann auch für Koch- bzw. Brühwurst verwendet werden, die in dieser Hülle nach dem handwerksüblichen Verfahren hergestellt werden kann, wobei beim Räuchern die Rauchaufnahme durch den Kollagenfilm hindurch gewährleistet ist, ohne dass Wurstbrät austritt.

4. Auch bei der Verwendung für Rohwurst bietet die erfindungsgemäße Wursthülle gegenüber der unbeschichteten Wursthülle aus Textilgewebe den Vorteil, dass der Kollagenfilm auf das Wurstgut übergeht und das Abpellen der Gewebehülle sehr erleichtert. Außerdem wird durch den auf der Wurstoberfläche haftenden Kollagenfilm eine gleichmäßigere Rauchannahme erzielt. Schließlich erhält man durch den vollkommen transparenten Film ein sehr klares Bild von dem darunterliegenden Wurstgut, bei dem die Fleich- und Speckstückchen genau erkennbar sind.

Der nach dem Abschälen der Wurst auf der Oberfläche zurückbleibende Kollagenfilm hat eine Dicke von 5-50, bevorzugt 10-25 µm.

Die Erfindung wird durch folgende Figur erläutert :

In der anliegenden Figur stellt 1 die textile Außenschicht und 2 die Kollageninnenschicht der erfindungsgemäßen Wursthülle dar.

Die Erfindung wird durch das folgende Beispiel erläutert :

Ein Zellwollgewebe mit Leinenbindung 27/27 Fäden je cm und 50/50 Den. wurde vor der Übergabe an einen Spannrahmentrockner mit einer wässrigen Kollagendispersion beschichtet, die sich wie folgt zusammensetzte :

1,0 % Kollagen
0,1 % Glycerin
0,001 % Glyoxal

Der pH-Wert wurde auf 3,0 eingestellt. Die Bahn wurde mit einer Geschwindigkeit von 10 m/min.

durch den Spannrahmentrockner gefahren, in dem die Trockenlufttemperatur auf 120 °C eingestellt war.

Durch den Zusatz von Glyoxal und die nachfolgende Erhitzung wurde der Kollagenfilm wasserfest gemacht und seine Haftung am Zellwollgewebe verbessert.

Die Dicke des Kollagenfilms betrug ca 10 g/m$^2$.

Aus Abschnitten des beschichteten Gewebes wurden Wursthüllen von 70 mm Durchmesser und 40 cm Länge genäht, wobei der Kollagenfilm die Innenseite der Wursthülle bildete, und darin auf handwerksübliche Weise Brühwürste und Rohwürste hergestellt.

Beim Abpellen der Wursthüllen zeigt sich, dass nur die textile Hülle abgezogen wurde, jedoch der Kollagenfilm auf der Wurst zurückgeblieben war und dort eine glatte Oberfläche bildete. Beim Verkosten der Würste war der Kollagenfilm nicht zu spüren.

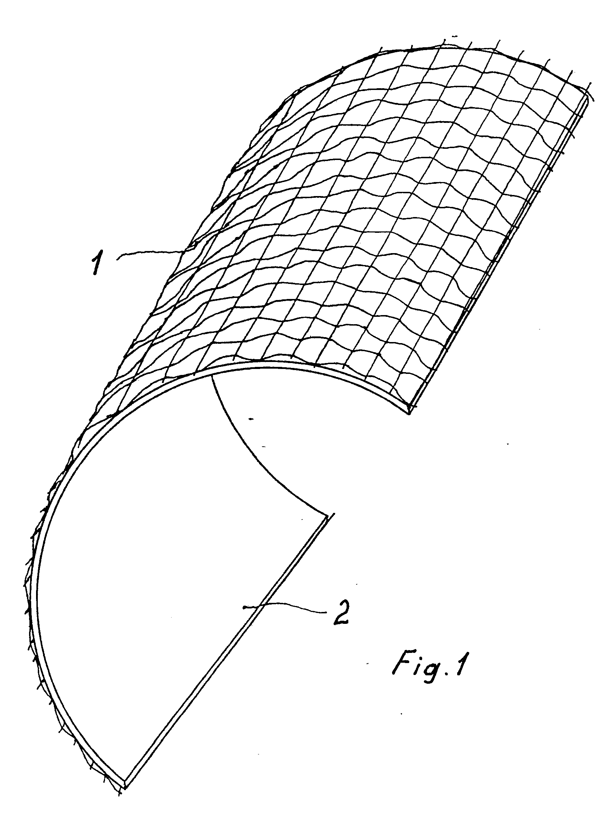

## Ansprüche

1. Zweischichtige Wursthülle, bestehend aus einem äußeren Textilgewebe und einer Innenschicht aus Kollagen, dadurch gekennzeichnet, dass die Kollagenschicht beim Abziehen der Wursthülle auf der Oberfläche des Wurstguts haften bleibt.

2. Wursthülle nach Anspruch 1, dadurch gekennzeichnet, dass sie 0,5-4 Teile eines Haftvermittlers und 30-300 Teile eines Weichmachers je 1 000 Teile Kollagen enthält.

3. Wursthülle nach Anspruch 2, dadurch gekennzeichnet, dass der Haftvermittler in der Kollagenbeschichtung enthalten ist.

4. Wursthülle nach einem der Ansprüche 2, dadurch gekennzeichnet, dass der Haftvermittler auf dem Textilgewebe angeordnet ist.

5. Wursthülle nach einem der Ansprüche 1 bis 4, dadurch gekennzeichnet, dass die Wursthülle Haftvermittler enthält, die zum Wasserfestmachen von Kollagen geeignet sind.

6. Wursthülle nach Anspruch 5, dadurch gekennzeichnet, dass sie als Haftvermittler Holzrauchpräparate, Aldehyde, Aluminiumsalze und/oder Eisensalze enthält.

7. Wursthülle nach einem der Ansprüche 1 bis 6, dadurch gekennzeichnet, dass das Beschichtungsgewicht 2-20, bevorzugt 5-15 g Kollagen/m$^2$, gewogen nach 24-stündiger Klimatisierung in Normklima, beträgt.

8. Wursthülle nach einem der Ansprüche 1 bis 7, dadurch gekennzeichnet, dass sie neben wenigstens einem Haftvermittler wenigstens einen Weichmacher enthält.

9. Wursthülle nach Anspruch 8, dadurch gekennzeichnet, dass der Weichmachergehalt, bezogen auf Kollagentrockenstoff, 3-30 Gew.-%, vorzugsweise 5-15 Gew.-%, beträgt.

10. Wursthülle nach Anspruch 9, dadurch gekennzeichnet, dass sie als Weichmacher Glyzerin, Propylenglykol und/oder Sorbit enthält.

11. Wursthülle nach einem der Ansprüche 1 bis 10, dadurch gekennzeichnet, dass das Gewichtsverhältnis von Haftvermittler : Weichmacher : Kollagen 0,8-1,25 Teile : 75-125 Teile : 1 000 Teilen beträgt.

12. Wursthülle nach einem der Ansprüche 1 bis 11, dadurch gekennzeichnet, dass sie ein Textilgewebe mittlerer Dichte, bevorzugt mit Leinenbindung enthält.

13. Wursthülle nach einem der Ansprüche 1 bis 12, dadurch gekennzeichnet, dass sie ein Textilgewebe eines Flächengewichts von 70 bis 150 g/m², vorzugsweise 100 bis 125 g/m², enthält.

14. Verfahren zur Herstellung der Wursthülle nach Ansprüchen 1 bis 13, dadurch gekennzeichnet, dass ein Textilgewebe mit einer verdünnten wässrigen Kollagendispersion eines Feststoffgehalts von nicht mehr als 5 Gew.-% in Gegenwart eines Haftvermittlers in einer Menge von 0,5 bis 4 Gewichtsteile, vorzugsweise 0,75 bis 2 Gewichtsteile und eines Weichmachers in einer Menge von 30-300 Teile, vorzugsweise 50-150 Teile, je 1 000 Teile Kollagen beschichtet und anschließend im gespannten Zustand getrocknet wird.

15. Verfahren nach Anspruch 14, dadurch gekennzeichnet, dass das Textilgewebe mit einer wässrigen Kollagen-dispersion eines Feststoffgehalts von 0,1 bis 4 %, vorzugsweise 0,8 bis 2 %, beschichtet wird.

16. Verfahren nach einem der Ansprüche 14 bis 15, dadurch gekennzeichnet, dass der Haftvermittler vor dem Beschichten in die Kollagendispersion eingemischt wird.

17. Verfahren nach einem der Ansprüche 14 bis 15, dadurch gekennzeichnet, dass bei Verwendung von Aluminium- oder Eisensalzen als Haftvermittler diese vor dem Beschichten mit Kollagen auf das Gewebe aufgesprüht und eingetrocknet werden.

18. Verfahren nach einem der Ansprüche 14 bis 17, dadurch gekennzeichnet, dass die Beschichtung mit einer Kollagendispersion durchgeführt wird, die einen Weichmacher für Kollagen enthält.

19. Verfahren nach einem der Ansprüche 14 bis 18, dadurch gekennzeichnet, dass das Textilgewebe einseitig beschichtet wird.

20. Verfahren nach einem der Ansprüche 14 bis 18, dadurch gekennzeichnet, dass man für die Kollagenbeschichtung Leinengewebe mittlerer Dichte verwendet.

21. Verfahren nach einem der Ansprüche 14 bis 20, dadurch gekennzeichnet, dass man das mit Kollagen beschichtete und getrocknete Textilgewebe durch Zuschneiden und Zusammennähen mit der Kollagenbeschichtung nach innen in die gewünschte Wursthüllenform bringt.

22. Roh- und Brühwurst, gekennzeichnet durch eine Wursthülle nach Ansprüchen 1 bis 13.

23. Roh- und Brühwurst nach Anspruch 22, gekennzeichnet durch eine Dicke der Kollagenbechichtung von 5-50 μm, insbesondere 10-25 μm.

## Claims

1. Two-layered sausage casing comprising an outer textile fabric and an inner layer comprising collagen, characterised in that the collagen layer continues to adhere to the surface of the sausage material when the sausage casing is pulled off.

2. Sausage casing according to claim 1, characterised in that it incorporates from 0.5 to 4 parts of an adhesion promoter and from 30 to 300 parts of a plasticiser per 1 000 parts of collagen.

3. Sausage casing according to claim 2, characterised in that the adhesion promoter is incorporated in the collagen coating.

4. Sausage casing according to claim 2, characterised in that the adhesion promoter is located on the textile fabric.

5. Sausage casing according to any one of claims 1 to 4, characterised in that the sausage casing incorporates adhesion promoters that are suitable for water-proofing collagen.

6. Sausage casing according to claim 5, characterised in that it incorporates, as adhesion promoter(s), wood-smoke preparations, aldehydes, aluminium salts and/or iron salts.

7. Sausage casing according to any one of claims 1 to 6, characterised in that the weight of the coating is from 2 to 20, preferably from 5 to 14, g of collagen/m², weighed after 24 hours' climatisation in a standard environment.

8. Sausage casing according to any one of claims 1 to 7, characterised in that it incorporates, in addition to at least one adhesion promoter, at least one plasticiser.

9. Sausage casing according to claim 8, characterised in that the content of plasticiser, based on dry collagen material, is from 3 to 30 % by weight, preferably from 5 to 15 % by weight.

10. Sausage casing according to claim 9, characterised in that it contains as plasticiser(s) glycerin, propylene glycol and/or sorbitol.

11. Sausage casing according to any one of claims 1 to 10, characterised in that the weight ratio of adhesion promoter : plasticiser : collagen is from 0.8 to 1.25 parts : from 75 to 125 parts : 1 000 parts.

12. Sausage casing according to any one of claims 1 to 11, characterised in that it contains a textile fabric of medium thickness, preferably having a linen weave.

13. Sausage casing according to any one of claims 1 to 12, characterised in that it contains a textile fabric having a weight per unit area of from 70 to 150 g/m², preferably from 100 to 125 g/m².

14. Process for the manufacture of the sausage casing according to claims 1 to 13, characterised in that a textile fabric is coated with a dilute aqueous collagen dispersion having a solids content of not more than 5 % by weight, in the presence of an adhesion promoter in an amount of from 0.5 to 4 parts by weight, preferably from 0.75 to 2 parts by weight, and of a plasticiser in an amount of from 30 to 300 parts, preferably from 50 to 150 parts, per 1 000 parts of collagen, and is then dried in a tensioned condition.

15. Process according to claim 14, characterised in that the textile fabric is coated with an aqueous collagen dispersion having a solids content of from 0.1 to 4 %, preferably from 0.8 to 2 %.

16. Process according to claim 14 or 15, characterised in that the adhesion promoter is mixed with the collagen dispersion before the coating operation.

17. Process according to claim 14 or 15, characterised in that, when aluminium or iron salts are used as the adhesion promoter, they are sprayed onto the fabric and dried before it is coated with collagen.

18. Process according to any one of claims 14 to 17, characterised in that the coating operation is carried out using a collagen dispersion containing a plasticiser for collagen.

19. Process according to any one of claims 14 to 18, characterised in that the textile fabric is coated on one side.

20. Process according to any one of claims 14 to 18, characterised in that linen fabric of medium thickness is used for the collagen coating.

21. Process according to any one of claims 14 to 20, characterised in that the textile fabric that has been coated with collagen and dried is formed into the desired sausage-casing shape by being cut to size and sewn together, with the collagen coating on the inside.

22. Raw sausage and boiling sausage, characterised by having a sausage casing according to claims 1 to 13.

23. Raw sausage and boiling sausage according to claim 22, characterised in that the thickness of the collagen coating is from 5 to 50 μm, especially from 10 to 25 μm.


**Revendications**

1. Enveloppe pour saucisses à deux couches, constituée d'un tissu textile extérieur et d'une couche interne de collagène, caractérisée en ce que la couche de collagène reste adhérer à la surface de la chair de la saucisse lors de l'arrachement de l'enveloppe.

2. Enveloppe suivant la revendication 1, caractérisée en ce qu'elle contient de 0,5 à 4 parties d'un agent conférant de l'adhésivité et de 30 à 300 parties d'un plastifiant par 1 000 parties de collagène.

3. Enveloppe suivant la revendication 2, caractérisée en ce que la couche de collagène contient l'agent conférant de l'adhésivité.

4. Enveloppe suivant la revendication 2, caractérisée en ce que le tissu textile porte l'agent conférant de l'adhésivité.

5. Enveloppe suivant l'une quelconque des revendications 1 à 4, caractérisée en ce que cette enveloppe contient des agents conférant de l'adhésivité qui conviennent à faire résister le collagène à l'eau.

6. Enveloppe suivant la revendication 5, caractérisée en ce qu'elle contient des préparations de fumaison, des aldéhydes, des sels d'aluminium et/ou des sels de fer, à titre d'agents conférant de l'adhésivité.

7. Enveloppe suivant l'une quelconque des revendications 1 à 6, caractérisée en ce que le poids de la couche de collagène varie de 2 à 20, avantageusement de 5 à 15 g par m², pesés après une climatisation de 24 heures sous climat normalisé.

8. Enveloppe suivant l'une quelconque des revendications 1 à 7, caractérisée en ce qu'elle contient au moins un plastifiant en plus d'au moins un agent conférant de l'adhésivité.

9. Enveloppe suivant la revendication 8, caractérisée en ce que la teneur en plastifiant varie de 3 à 30 % en poids, de préférence de 5 à 15 % en poids par rapport à la substance sèche du collagène.

10. Enveloppe suivant la revendication 9, caractérisée en ce qu'elle contient de la glycérine, du propylène-glycol et/ou de la sorbite, à titre de plastifiant.

11. Enveloppe suivant l'une quelconque des revendications 1 à 10, caractérisée en ce que le rapport des parties pondérales de l'agent conférant de l'adhésivité au plastifiant au collagène est de 0,8-1,25 : 75-125 : 1 000.

12. Enveloppe suivant l'une quelconque des revendications 1 à 11, caractérisée en ce qu'elle contient un tissu textile de serrage moyen, de préférence toilé.

13. Enveloppe suivant l'une quelconque des revendications 1 à 12, caractérisée en ce qu'elle contient un tissu textile d'un poids surfacique de 70 à 150 g/m², de préférence de 100 à 125 g/m².

14. Procédé de fabrication de l'enveloppe pour saucisses suivant l'une quelconque des revendications 1 à 13, caractérisé en ce que l'on revêt un tissu textile d'une dispersion aqueuse diluée de collagène, d'une teneur en corps solides non supérieure à 5 % en poids, en présence d'un agent conférant de l'adhésivité en une quantité de 0,5 à 4 parties en poids, de préférence 0,75 à 2 parties en poids et d'un plastifiant en une quantité de 30 à 300 parties, de préférence 50 à 150 parties par 1 000 parties de collagène et en ce qu'on le sèche ensuite à l'état tendu.

15. Procédé suivant la revendication 14, caractérisé en ce que l'on revêt le tissu textile d'une dispersion aqueuse de collagène d'une teneur en corps solides de 0,1 à 4, de préférence de 0,8 à 2 %.

16. Procédé suivant l'une quelconque des revendications 14 et 15, caractérisé en ce que l'on mélange l'agent conférant de l'adhésivité à la dispersion de collagène avant le revêtement.

17. Procédé suivant l'une quelconque des revendications 14 et 15, caractérisé en ce que lors de l'utilisation de sels d'aluminium ou de sels de fer à titre d'agents conférant de l'adhésivité, on pulvérise et sèche ceux-ci sur le tissu avant le revêtement avec le collagène.

18. Procédé suivant l'une quelconque des revendications 14 à 17, caractérisé en ce que l'on réalise le revêtement avec une dispersion de collagène qui contient un plastifiant du collagène.

19. Procédé suivant l'une quelconque des revendications 14 à 18, caractérisé en ce que l'on revêt le tissu textile d'un seul côté.

20. Procédé suivant l'une quelconque des revendications 14 à 18, caractérisé en ce que l'on utilise des tissus de toile de serrage moyen pour le revêtement à l'aide de collagène.

21. Procédé suivant l'une quelconque des revendications 14 à 20, caractérisé en ce que l'on amène le tissu textile revêtu de collagène et séché à la forme d'enveloppe pour saucisses souhaitée par découpe et couture avec le revêtement de collagène vers l'intérieur.

22. Saucisse crue et cuite ou bouillie, caractérisée par le fait qu'elle comporte une enveloppe suivant l'une quelconque des revendications 1 à 13.

23. Saucisse crue et cuite ou bouillie suivant la revendication 22, caractérisée en ce qu'elle comporte un revêtement de collagène d'une épaisseur de 5 à 50 μ, plus particulièrement de 10 à 25 μ.

1 —

2

*Fig.1*